# EUROPEAN PATENT APPLICATION

(11) **EP 2 045 059 A2**
(43) Date of publication of application: **08.04.2009**
(21) Application number: 08100965.6
(22) Date of filing: 25.01.2008
(51) Int. Cl.: B28B 19/00, E04C 2/288

(54) **Building element and its production method**

(30) Priority: 25.01.2007 FI 20075048; 25.01.2007 FI 20070033 U
(71) Applicant: Rudus Oy, 00441 Helsinki (FI)
(72) Inventor: Keinänen, Tero, 53850 Lappeenranta (FI); Kaaria, Mauri, 48300 Kotka (FI)
(74) Representative: Kupiainen, Juhani Kalervo

(57) **Abstract**

The object of the invention is a building element (20) and a method for its production. More particularly, the invention relates to an insulating mould block, which has an insulating layer and a rock material layer connected to each other, and a core for casting. This type of blocks are usually installed by manual bedding, whereby a substantial strain is caused by the weight of the blocks. In the solution according to the invention one or several trusses (27a-27f) are formed inside the insulation part (21) and necks (24a-24c, 25a-25c) of the panels. The trusses are most preferably cast inside the necks, whereby the trusses attach the insulation part and the panel to each other. This way the parts of an insulation mould block form a rigid entity without a dovetail joint, whereby a specific attachment organ is not required. This way it is possible to achieve a lighter block, larger casting cores larger and better heat insulation.

## Description

The object of the invention is a building element and a method for its production. More specifically the invention relates to a insulation mould block, which has insulation layer and a rock material layer which are connected to each other, and a core for casting.

In the production of wall structures elements are used, which include inner and outer panel, and a heat insulation layer. The panels are typically produced of rock material, such as expanded clay or concrete. The panels of the element and the heat insulation has been attached to each other in such a way that the element is integral. The attachment between the panel and the insulation is typically based on wedge type formation of the edges, such as a dovetail joint. Such wall elements are called insulation blocks.

Insulation mould blocks are insulation blocks, in which casting cores have been arranged. When such blocks are bedded, they form a casting mould. After this, the blocks are reinforced and cast into a rigid structure.

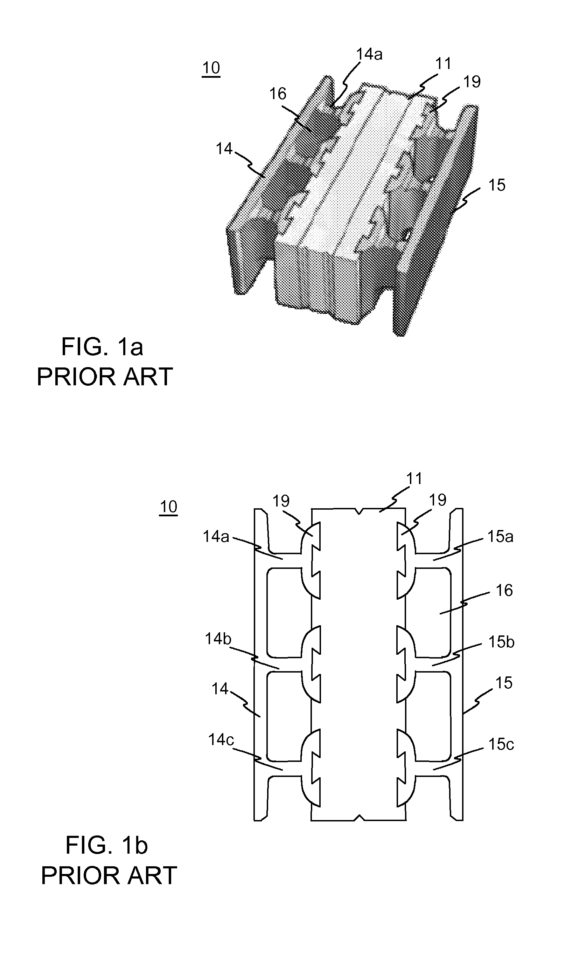

Figures 1a and 1b illustrate one insulation mould block according to prior art. Figure 1a shows the block as a perspective illustration and Figure 1b as top illustration. The insulation mould block has an insulation part 11 made of e.g. expanded polystyrene (EPS) i.e. styrox, and panels 14 and 15 made of e.g. concrete. The panels have necks 4a-14c and 15a-15c which each have an attachment part organ. The attachment organ forms a dovetail joint together with recesses of the insulation part. The space 16 remaining between adjacent necks is used as a casting core.

There are some disadvantages related with insulation blocks according to the prior art. Insulation blocks are usually bedded manually, which is heavy work. The weight of each block can be 22-28 kg, so the total weight of the blocks moved during a working day may become fairly high. Another disadvantage related to a block according to the prior art is that at the location of the dovetail joint the concrete protrudes to the recess of the insulation material, which reduces the heat insulation capability of the block. Further, in order to get the dovetail joint strong enough, the insulation part must be produced in such a way that its density becomes high. In this case much insulation material is required, which increases the production costs of the insulation block. Additionally, one disadvantage related to a prior art block is that the casting cores are relatively small, whereby it is necessary to use fine-grained concrete in order to make the concrete fill the cores completely. When using fine-grained concrete, the shrinkage may become larger than desired.

The purpose of the invention is to obtain an insulation mould block and an installation method for it, by means of which the above mentioned problems can be eliminated or decreased.

The objects of the invention are achieved with a solution, in which one or several trusses are formed inside the insulation part and the necks of the panels. The trusses are most preferably cast inside the necks, whereby the trusses attach the insulation part and the panel to each other. This way the parts of an insulation mould block form a rigid complex without a dovetail joint, whereby a specific attachment organ is not required.

An insulation mould block according to the invention, which comprises an insulation part, panels on both sides of the insulation part, which panels have at least one neck against the insulation part, and at least one casting core, is characterised in that the insulation mould block comprises at least one truss, which extends partly inside the insulation part and partly inside the neck of a panel.

The method according to the invention for producing an insulation mould block is characterised in that the method comprises phases in which:
- an insulation part is produced,
- at least one truss is formed into the insulation part in connection with or after producing the insulation part in such a way that at least one truss extends outside a side of the insulation part,
- panels are cast of rock material at both sides of the insulation part, in which panels there are necks against the insulation part, whereby the truss remains at least in part inside said neck.

According to one embodiment of the invention the trusses are rigid bars. The trusses can be in a horizontal or inclined position when examined from the end of the block. According to another preferable embodiment the trusses are laminar, situating e.g. parallel to the end of the insulation mould block. The trusses made of sheets can be bent in order to e.g. improve their rigidity.

The trusses are produced of e.g. steel, other metal of plastic. The surface and/or edge of the trusses can be made uneven in order to strengthen the attachment. E.g. grooves/valleys and/or ridges can be made on the surface of trusses. The trusses may also have bends/curves or projections. Trusses can also be attached to each other.

According to one preferable embodiment a truss protrudes outside two opposite sides of the insulating part and inside necks of two panels that are against opposite sides of the insulating part.

In a production method according to one embodiment of the invention the trusses are placed to the insulation part in connection with casting of the insulating part. According to another embodiment trusses are placed to the insulating part by pushing after the production of the insulating part.

Some preferable embodiments of the invention are also described in dependent claims.

By means of the invention remarkable advantages are achieved compared to prior known solutions. In an insulating mould block according to the invention it is not required to have an attachment organ cast of concrete for providing a dovetail joint. Thanks to this, an insulating mould block can be produced much lighter in weight, typically 20-25% lighter. A block according to the invention is therefore easier to be handled, and the total weight of the blocks to be bedded can be made much smaller.

Since an attachment organ cast of concrete for providing a dovetail joint is not required the insulation mould block according to the invention the casting core can be made much larger. Thus the casting cores can be made to be filled completely even if a rougher concrete is used in casting. In this case the shrinkage remains smaller and a better quality of the structure is achieved.

Since a dovetail joint is not required and the strength of the insulation part need not be high, the insulation part can be produced in such a way that its density is small and less insulation material is needed. This way production costs can be made smaller. Additionally, heat insulation capability of the insulation mould block according to the invention can be made better because the insulating part is uniform through its whole diameter.

In this patent application in the description of the insulating mould block and citations the block is imagined to be in a position which it usually has in a wall structure. A "side" of an insulating mould block means the long even side of the block, which side can form e.g. a part of the outer surface of the wall structure. An "end" of a block means surfaces of a block which are placed opposite to each other in the blocks when installed.

In this patent application "insulation mould block" means any building element which has an insulating layer and, on both sides of it, panels of load-bearing material and which has cores for casting at the location of installation.

In the following some embodiments of the invention are described more accurately by means of enclosed drawings, in which
- Figure 1a: illustrates a prior known insulation mould block in a perspective view,
- Figure 1 b: illustrates a prior known insulation mould block in a top view,
- Figure 2a: illustrates one insulation mould block according to the invention seen from above,
- Figure 2b: illustrates one insulation mould block according to the invention seen from the end,
- Figure 3: illustrates an end view of one insulation mould block according to the invention, in which trusses locate in a crossed position,
- Figure 4: illustrates an end view of one insulation mould block according to the invention, in which the trusses are bent at their ends,
- Figure 5: illustrates one insulating mould block seen from above, wherein the trusses have protrusions at their ends,
- Figure 6: illustrates one insulating mould block seen from above, wherein the ends of the trusses are connected to a bar,
- Figure 7a: illustrates one insulating mould block seen from above, wherein there are laminar trusses,
- Figure 7b: illustrates a side view of one insulating mould block according to the invention which has laminar trusses,
- Figure 7c: illustrates an end view of one insulating mould block according to the invention which has laminar trusses,
- Figure 7d: illustrates a cut perspective figure of one insulating mould block according to the invention, which has laminar trusses,
- Figure 8: illustrates as a flow diagram a method according to the invention for producing an insulation mould block, wherein trusses are placed after producing the insulating part,
- Figure 9: illustrates as a flow diagram a method according to the invention for producing an insulation mould block, wherein trusses are placed in connection with producing the insulating part,
- Figure 10a: illustrates a top view of an insulating block, in which laminar trusses have been used, and
- Figure 10b: illustrates the insulating mould block of Figure 10a seen from above.

Figures 1a and 1b were already described earlier in connection with description of the prior art.

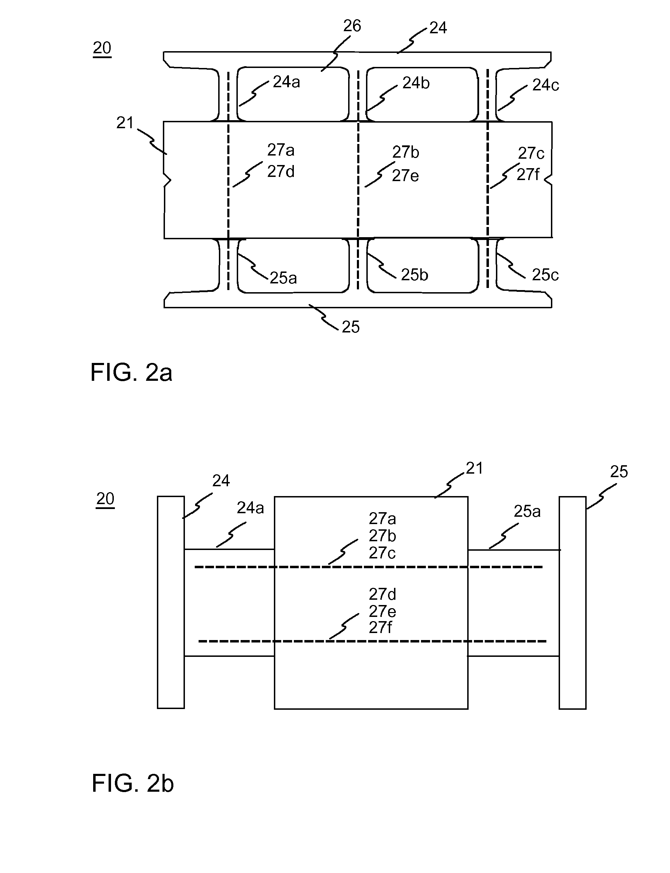

Figures 2a and 2b illustrate one insulation mould block 20 according to the invention. Figure 2a shows the block seen from above and Figure 2b shows the block seen from the end. The block has an insulating part 21 and two panels 24 and 25. The panels have necks 24a-24c and 25a-25c, which are placed against the sides of the insulation part. There are casting cores between the necks. According to the invention, the block has trusses 27a-27f, which attach the insulating part and the panels to each other. Trusses 27a and 27d are at their middle parts inside the insulating part, and at their ends inside necks 24a and 25a. Trusses 27a and 27d are located one on the other at a distance from each other. Correspondingly, the trusses 27b and 27e are at their middle parts inside the insulating part, and at their ends inside necks 24b and 25b. Further, the trusses 27c and 27f are at their middle parts inside the insulating part, and at their ends inside necks 24c and 25c.

The insulating part and panels of an insulation mould block can be produced of corresponding materials as prior known blocks. Trusses can be produced of e.g. steel or other metal or plastic. The outer surface of the trusses can be made uneven in order to achieve a better attachment to the panels. For example, grooves or ridges can be produced on the surface of the trusses. In order to improve the attachment one can also use formation of trusses or projections attached to them, examples of which will next be described.

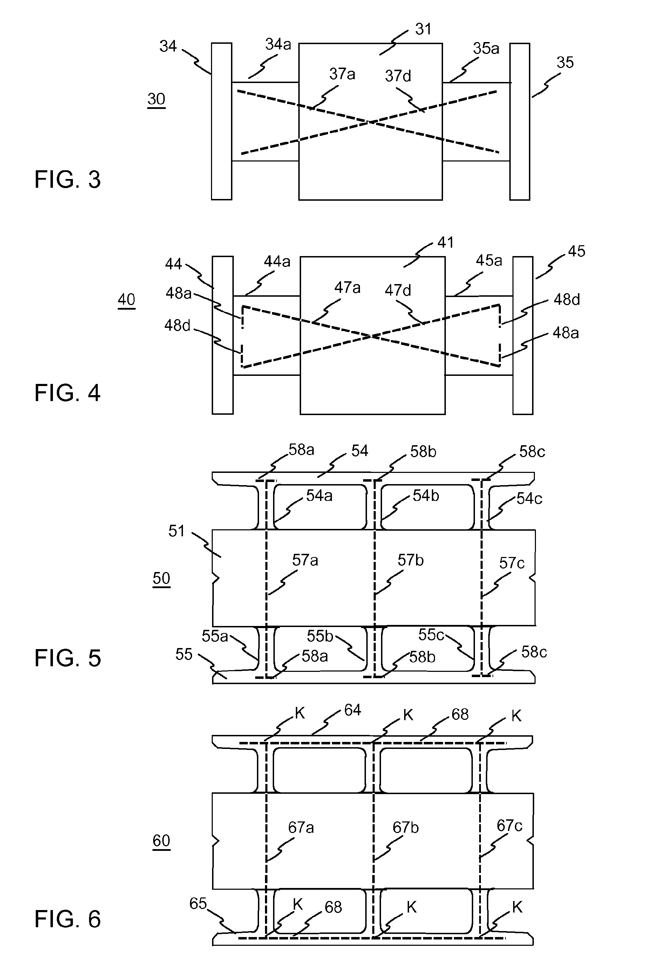

Figure 3 illustrates one insulation mould block 30, in which two trusses 37a and 37d are placed mutually crossed inside an insulating part 31 and necks 34a and 35a of the panels 34 and 35. Figure 4 illustrates another insulating mould block 40 according to the invention, wherein crossed located trusses 47a and 47b have additionally been bent at their ends 48a-48d. The insulating part 41, panels 44 and 45 and the necks 44a and 45a of the panels correspond to the blocks illustrated in Figures 2b and 3.

Figure 5 illustrates one insulation mould block 50 seen from above. Its trusses 57a, 57b and 57c extend through the insulating part 51, necks 54a-54c and necks 55a-55c into the longitudinal parts of the panels 54 and 55. Projections 58a-58c, such as sheets, have been attached to the ends of the trusses in order to strengthen the attachment. The projections can be attached by e.g. welding or soldering if the trusses and the projections are made of metal.

Figure 6 illustrates a top view of an insulation mould b60 lock according to the invention which corresponds to the block 50 of Figure 5 in other aspects but in the block illustrated in Figure 6 trusses 67a, 67b and 67c are attached at their ends K to projections 68 inside the panels, connecting the ends of the trusses. The projection can be a steel bar, for example, into which the ends of the trusses have been attached by welding. Alternatively, the ends of the trusses can be bent into loops, through which the projection 68 has been placed before the casting of the panels.

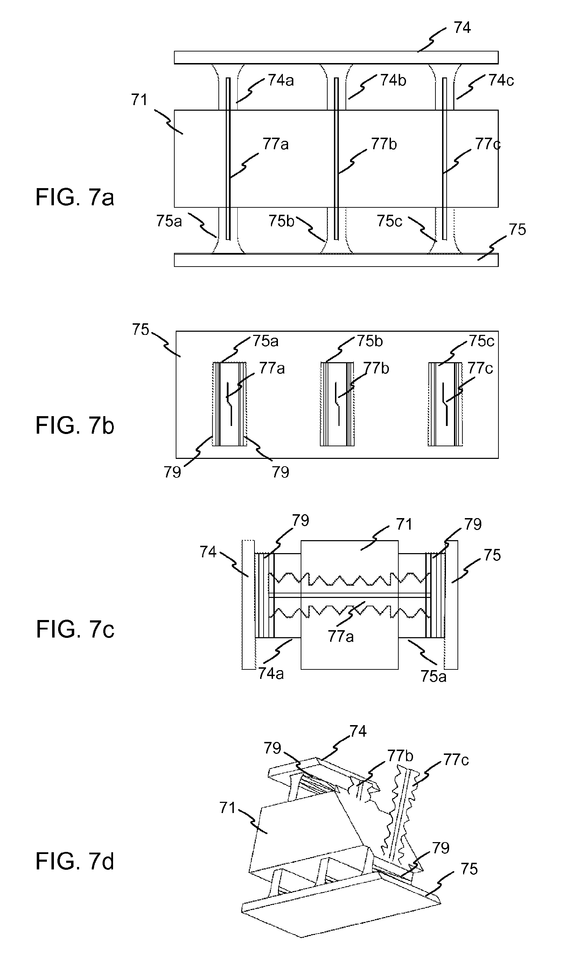

Figures 7a, 7b, 7c and 7d illustrate one insulation mould block according to the invention, which has laminar trusses. In order to improve the illustration the material is shown transparent in Figures 7a, 7b and 7c so that also the edges, borders and corners are visible in the Figure. In Figure 7d the material is shown non-transparent in a usual way, but the insulating part and the panels are shown oblique cut, whereby the two trusses inside the insulation block are partly visible.

In the insulation mould blocks according to Figures 7a-7d there are panels 74 and 75, which correspondingly have necks 74a, 74b, 74c and 75a, 75b, 75c. The laminar trusses 77a, 77b and 77c are inside the insulating part 71 at their middle parts and inside the necks at their ends.

It is meant by a laminar truss that it has substantially uniform thickness, preferably produced of a sheet. The long sides of the truss hare preferably formed uneven, such as waved or serrated, whereby there are valleys and/or ridges. From Figure 7b it is noticed that the truss is slightly bent longitudinally at its middle part. This way the rigidity of the truss has been improved.

Grooves have been arranged on the edge surfaces of the necks. They also have a purpose to e.g. improve the attachment of the concrete, which is set to the casting core in connection with installation, to the edges of the of the casting cores.

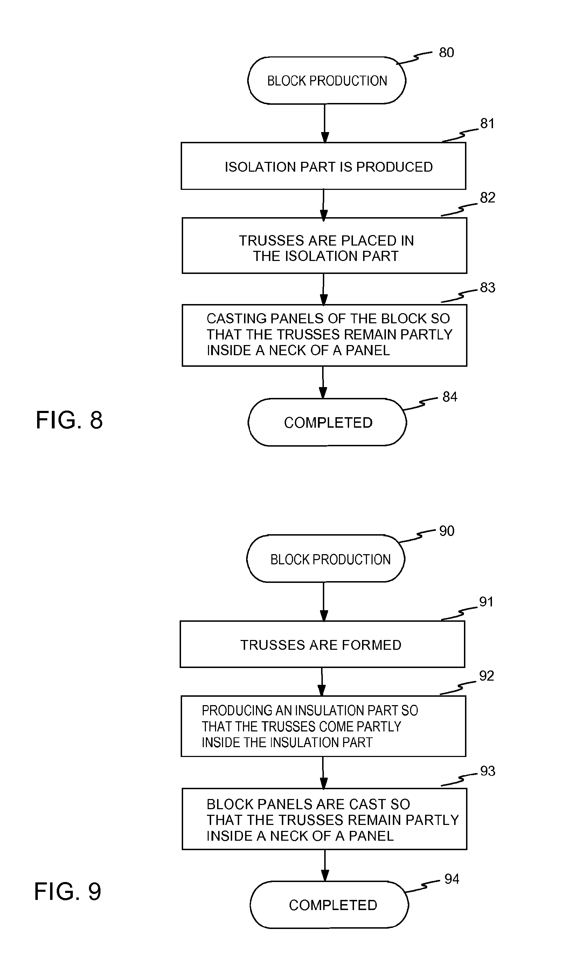

Figure 8 illustrates as a flow diagram a method according to the invention for producing an insulation mould block 80. In the method first an insulating part is produced in phase 81. After this, the trusses are placed to the insulating part by pushing them into correct locations through the insulating part in phase 82. The placing can be made manually or with a machine. In order to get the trusses pushed through the insulating part the trusses must have a form of elongated bars. It is possible to make holes to the insulating part for the trusses, or is the trusses are sufficiently rigid they can be pushed through the insulating part also without a hole made in advance. The both ends of the trusses which are placed to the insulating part preferably remain outside the insulating part. After placing into the insulating part, it is possible to attach projections to the ends of the trusses and/or the ends can be bent in order to achieve a stronger attachment to the panel. Finally the insulating part, provided with trusses, is placed to a mould, in which the panels of the block are cast in such a way that the trusses come partly inside the necks which are formed to the panel, phase 83. The panels are cast in such a way that casting cores are formed, which casting cores are bounded by the insulating part, panel and the neck of the panel. After this the block is completed, 84.

Figure 9 illustrates as a flow diagram another method according to the invention for producing an insulating mould block 90. In phase 91 of this method trusses are first formed, into which e.g. projections or bends can be ready made. The trusses are placed into a mould, in which mould an insulating part is produced in phase 92. The trusses are placed into the form in such a way that they come to the correct locations to the insulating part to be produced. The insulating part thus produced is placed into a mould, in which the panels of the block are cast with e.g. concrete so that the trusses come partly inside the necks formed to the panel, phase 93. The panels of the block are cast in such a way that casting cores are formed, which casting cores are bounded by the insulating part, panel and the neck of the panel. After this the block is completed, 94.

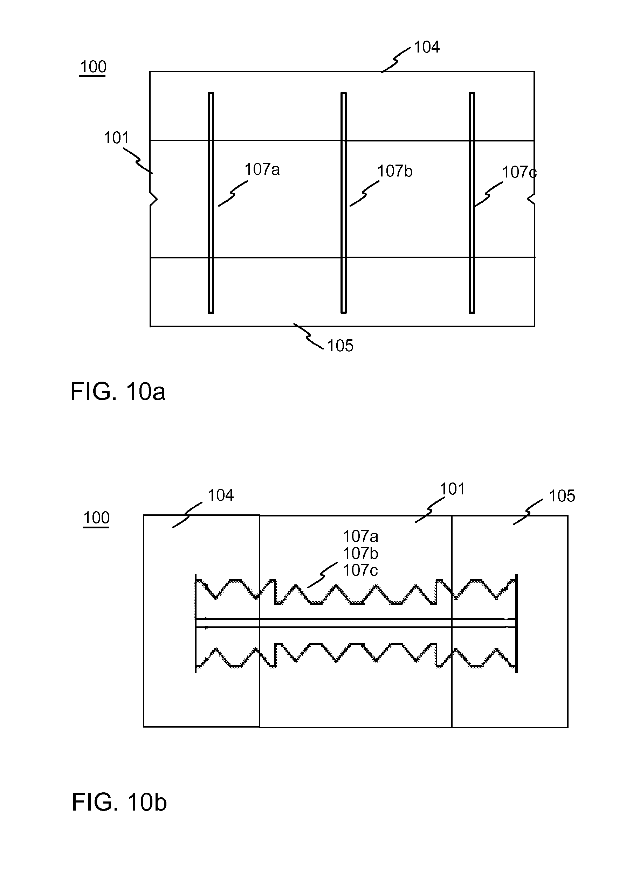

Figure 10a illustrates a top view and Figure 10b illustrates an end view of one insulating block. In Figures 10a and 10b the material of the insulating block is shown transparent in order to improve the illustration in such a way that the borders, edges and corners existing both outside and inside of the block are visible in the Figure. In the insulating block shown by Figures 10a and 10b laminar trusses have been used in the similar way as in the insulating mould block illustrated by Figures 7a-7d. However, the insulating block does not have casting cores, but the junction surface is uniform. The insulating block thus has an insulating part 101 and two panels 104 and 105, which place themselves against the sides of the insulating part 101. The sides of insulating part and the panel, which sides come against each other, are most preferably even on their surfaces and they therefore place themselves against each other at the whole area of their side surfaces. The insulating blocks have laminar trusses 107a, 107b and 107c, which attach the insulating part and the panels to each other. The trusses are at their middle parts inside the insulating part 101 and at their ends inside the panels 104 and 105. It is thus possible to notice that what is described in this patent application of insulating mould blocks can also be applied in connection with insulating blocks and with a method for producing them.

It should be noticed that above only some embodiments of a solution according to the invention has been described. The principle according to the invention can naturally be varied within the scope of protection determined by the patent claims concerning e.g. details of implementation and areas of use.

In addition to the examples described above the invention can also be applied in insulation mould blocks of other forms, such as corner blocks or end blocks. Also the dimension proportions may vary according to each application.

In the above examples, each truss extends outside two opposite sides of the insulating part and inside necks of the panels at the opposite sides of the insulating part. Even if this is the embodiment which has been considered most preferable, it is still possible to apply the invention in such a way that the truss extends inside a neck of only a panel which is against one side of the insulating part. In this case there are separate trusses for opposite panels. In this case, in order to have the truss sufficiently well attached in the insulating part it is preferable to form e.g. projections or bends/curves to the truss end which remains inside the insulating part.

In the embodiments described above the ends of the trusses have been cast inside panels. This is a preferable implementation because this way it is possible to get the attachment to the panels strong. However, it is alternatively possible to form recesses to the panels for the trusses and to attach the insulating part provided with trusses separately to ready cast panels with e.. concrete.

The present invention is most suitable in insulating mould blocks, the insulating part of which is rigid material and the height dimension of which is smaller than their length or width dimension. However, the invention can also be applied to other kinds of blocks.

## Claims

1. An insulation mould block (20), which comprises an insulation part (21), panels (24, 25) on both sides of the insulation part, which panels have at least one neck (24a-24c, 25a-25c) against the insulation part, and at least one casting core (26), is **characterised in that** the insulation mould block comprises at least one truss (27a-27f), which extends partly inside the insulation part and partly inside the neck of a panel.

2. An insulation mould block according to claim 1, **characterised in that** said at least one truss extends at least partly inside necks of panels which are at both sides of the insulating part.

3. An insulation mould block according to claim 1 or 2, **characterised in that** at least one truss has a bend/curve (38a, 38d).

4. An insulation mould block according to any preceding claim, **characterised in that** at least one end of at least one truss comprises a projection or an extension (58a-58c, 68).

5. An insulation mould block according to any preceding claim, **characterised in that** the truss (27a, 27d) is in a substantially horizontal position when examined from the end of the block.

6. An insulation mould block according to any preceding claim, **characterised in that** the surface and/or the edge of a truss is formed uneven for improving the strength of the attachment.

7. An insulation mould block according to claim 6, **characterised in that** grooves/valleys and/or ridges have been arranged into a surface or an edge of the truss.

8. An insulation mould block according to any preceding claim, **characterised in that** the truss is a rigid bar.

9. An insulation mould block according to any preceding claim, **characterised in that** the truss is laminar.

10. An insulation mould block according to any preceding claim, **characterised in that** the truss is parallel to the end of the insulation mould block.

11. Method for producing an insulation mould block, **characterised in that** the method comprises phases in which:
- an insulation part is produced (71, 82),
- at least one truss is formed into the insulation part in connection with or after producing the insulation part in such a way that at least one truss extends outside a side of the insulation part (72, 81, 82),
- panels are cast of rock material at both sides of the insulation part, in which panels there are necks against the insulation part, whereby the truss remains at least in part inside said neck (73, 83).

12. A method according to the claim 11, **characterised in that** the trusses are installed in connection with casting the insulation part (82).

13. A method according to the claim 11, **characterised in that** the trusses are installed after casting the insulation part (72) before casting the panels (73).

14. A method according to any of claims 11-13, **characterised in that** at least one end of a truss is bent or that projection part or an extension part is connected to it.

15. A method according to any of claims 11-14, **characterised in that** the truss is placed to the insulation part in such a way that its both ends extend outside opposite sides of the insulation part.

16. A method according to claim 15 **characterised in that** said at least one truss extends at least partly inside necks of panels at both sides of the insulation parts.

17. A method according to any of claims 11-16, **characterised in that** the truss is laminar and that it is placed parallel to the end of the insulation mould block.
